(19) Europäisches Patentamt
European Patent Office
Office européen des brevets

(11) **EP 2 784 552 A2**

(12) **EUROPEAN PATENT APPLICATION**

(43) Date of publication:
**01.10.2014 Bulletin 2014/40**

(51) Int Cl.:
***G01V 1/36*** *(2006.01)*

(21) Application number: **14161142.6**

(22) Date of filing: **21.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.03.2013 US 201361804375 P
07.06.2013 US 201361832413 P**

(71) Applicant: **CGG Services SA
91300 Massy (FR)**

(72) Inventor: **Maraschini, Margherita
91300 Massy (FR)**

(74) Representative: **Regimbeau
20, rue de Chazelles
75847 Paris Cedex 17 (FR)**

(54) **Method and device for attenuating random noise in seismic data**

(57)　　Methods (600, 1100) and devices (1200) for seismic data processing attenuate noise by replacing an attribute value $v(i)$ of a selected data point (700) $i$ with a weighted average $\hat{v}(i)$ of attribute values of data points $j$ from a window (710) that includes the selected data point $i$. The contribution to the weighted average of an attribute value $v(j)$ corresponding to a data point $j$ depends on how similar attribute values in the neighborhood $N_j$ of the data point $j$ are to attribute values in the neighborhood $N_i$ of the selected data point $i$.

## Figure 7

EP 2 784 552 A2

**Description**

**CROSS REFERENCE TO RELATED APPLICATIONS**

This application claims priority and benefit from U.S. Provisional Patent Application No. 61/804,375, filed March 22, 2013, for "Assessing the Impact of a Non-Local-Means random noise attenuator on coherency" and U.S. Provisional Patent Application No. 61/832,413, filed June 7, 2013, for "Assessing the Impact of a Non-Local-Means random noise attenuator on coherency," the entire contents of which are incorporated in their entirety herein by reference.

**BACKGROUND**

**TECHNICAL FIELD**

Embodiments of the subject matter disclosed herein generally relate to methods and devices used for attenuating random noise in seismic data in a manner that preserves local geological details.

**DISCUSSION OF THE BACKGROUND**

In a seismic survey, a seismic source is actuated ("fired") to emit seismic waves that propagate into the surveyed underground structure. The seismic waves are partially reflected by geological features, to be then detected by sensors generally known as "seismic receivers."

One problem in processing seismic data is that it includes noise in addition to signals corresponding to seismic waves reflected by the geological features. Noise may be either coherent or incoherent, and coherent noise may be spatially coherent, temporally coherent, or both. It is desirable to attenuate (e.g., filter or remove) noise in seismic data without distorting the signals.

A widely used prediction-based technique for removing random noise is Fxy filtering, which is described, for example, in M. Chase, "Random noise reduction by FXY prediction filtering," EAGE Conf. Exp. Abs., Paris, pp. 164-165, 1992; M. Chase, "Random noise reduction by 3-D spatial prediction filtering," SEG Ann. Mtg. Exp. Abs., New Orleans, pp. 1152-1153, 1992; and N. Gulunay, V. Sudhakar, C. Gerrard, and D. Monk, "Prediction filtering for 3-K poststack data," SEG Ann. Mtg. Exp. Abs., Washington, D.C., pp. 1183-1186, 1993. The contents of these articles are incorporated by reference.

Another random noise attenuation technique recently gaining popularity is rank reduction filtering as described, for example, in Chiu, S. K. and J. E. Howell, "Attenuation of coherent noise using localized-adaptive eigenimage filter," SEG, Expanded Abstracts, pp. 2541-2545, 2008; or in Chiu, S. K., "F-xy noise attenuation via multichannel singular spectrum analysis in randomized domain," SEG, Expanded Abstracts, pp. 3612-3616, 2011, or yet in Trickett et al., "Prestack rank-reducing noise suppression: theory," SEG Houston 2009 International Exposition and Annual Meeting, pp. 3332-3336, the contents of which are incorporated by reference.

Conventional random noise attenuating methods often have the disadvantage of obscuring (smearing) important geological details, such as the presence of structural or stratigraphic hydrocarbon traps.

Accordingly, it would be desirable to provide methods for efficiently filtering random noise from seismic data that overcome the drawbacks of conventional techniques, while performing comparably in terms of noise attenuation.

**SUMMARY**

Various embodiment presented here include a random noise attenuator able to preserve signal details. To attenuate noise while preserving geological details, filtering is performed by averaging amplitude values of proximal points, the values being weighted based on a measure of neighborhoods similarity. This approach is based on the observation that redundant structures (such as lateral extension of a fault plane or the meanders of a channel) are proximal (i.e., these features include adjacent points that have similar neighborhoods). Thus, if a filtered point is part of a redundant structure, other points in a window including the filtered point may also be part of the redundant structure. If a point in the window has a neighborhood similar to the filtered point's neighborhood, the point is weighted heavily when calculating the average because it is assumed that if the two points belong to the same structure, then the attribute of the two points have similar values. For each point in the image, the weighted average of the attribute of samples in a window, with weights that depend on the similarity of the neighborhood, then includes the same signal as the original point, but the random noise is likely attenuated.

According to one embodiment, there is a method for attenuating random noise within a seismic data cube. The method includes selecting a data point i in the seismic data cube, wherein the data point i is associated with an attribute value $v(i)$. The method further includes choosing a window $W_i$ (710) that includes the data point i, and replacing the attribute value $v(i)$ with a weighted average $\hat{v}(i)$ calculated by a processor based on attribute values $v(j)$ of data points $j$ within the window $W_i$.

According to another embodiment, there is a method for seismic data processing including replacing an attribute value $v(i)$ of a selected data point $i$ with a linear combination $\hat{v}(i)$ of attribute values $v(j)$ of data points $j$ from a window $W_i$ including the selected data point i, the window $W_i$ being a three-dimensional subset of seismic data.

According to yet another embodiment there is a method for attenuating random noise is seismic data including associating a weight $w(i,j)$ to each data point j within a window $W_i$ including a point i, the weight $w(i,j)$ being based on a result of comparing attribute values in a three-dimensional neighborhood $N_i$ of the data point i to attribute values in a three-dimensional neighborhood $N_j$ of the data point j. The method further includes replacing an attribute value $v(i)$ corresponding to the selected data point i, with a new attribute value $\hat{v}(i)$ which is a sum of attribute values $v(j)$ corresponding to data points j weighed using associated weights $w(i,j)$, respectively.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a land seismic data acquisition system;

Figure 2 is a schematic diagram of a marine seismic data acquisition system;

Figure 3 illustrates a multi-level seismic source;

Figure 4 illustrates a variable-depth streamer;

Figure 5 is a flow diagram illustrating seismic data processing for generating an image of a surveyed subsurface formation;

Figure 6 is a flowchart of a method for attenuating random noise in seismic data according to an embodiment;

Figure 7 is an illustration of a seismic data cube;

Figure 8 is a graph illustrating weight as a function of a similarity measure according to an embodiment;

Figures 9A-9E are time slices of seismic data;

Figures 10A-10E are inline slices of seismic data;

Figure 11 is a flowchart of a method for attenuating random noise in seismic data according to another embodiment; and

Figure 12 is a schematic diagram of a seismic data processing device according to an exemplary embodiment.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed using terminology of random noise attenuation methods used in seismic data analysis. However, similar methods may also be pertinent to analyzing similar data sets related to electromagnetic waves or other data.

Reference throughout the specification to "one embodiment" or "an embodiment" means that a particular feature, structure or characteristic described in connection with an embodiment is included in at least one embodiment of the subject matter disclosed. Thus, the appearance of phrases "in one embodiment" or "in an embodiment" in various places throughout the specification is not necessarily referring to the same embodiment. Further, the particular features, structures or characteristics may be combined in any suitable manner in one or more embodiments.

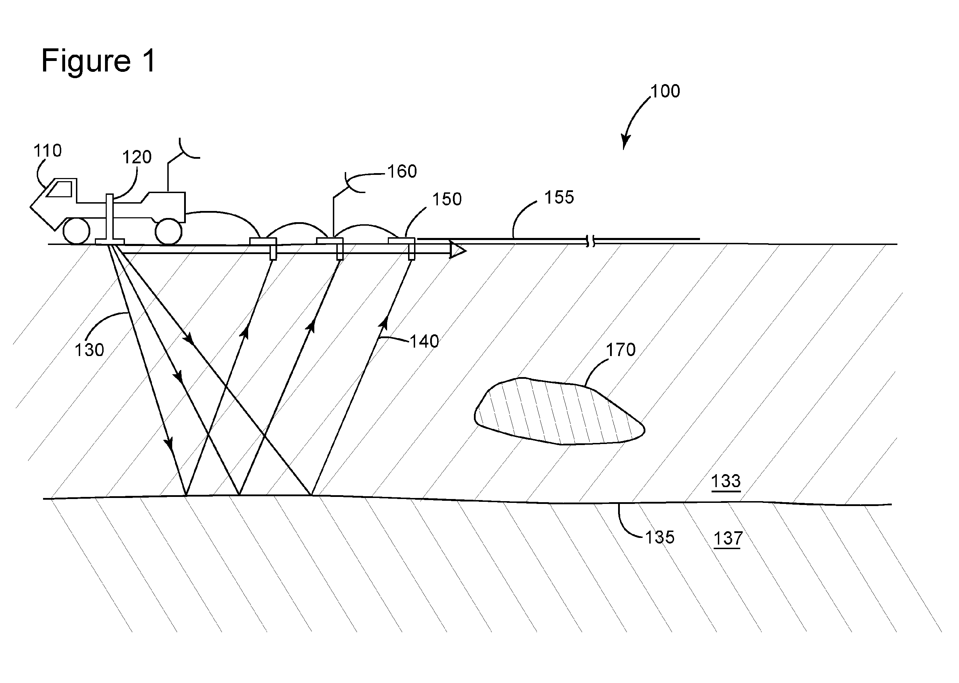

The seismic data processing methods described below may be applied to land seismic data and to marine seismic data. Land seismic data is acquired using grids of seismic detectors arranged on the surveyed area to detect reflections of seismic waves generated at various locations. On land, seismic waves may be generated by vibrating sources or dynamite. For example, a land seismic data acquisition system 100 is illustrated in Figure 1. A truck 110 carries a vibrating source 120 that generates seismic waves 130 (only one labeled), which are reflected by interface 135 between rock layers 133 and 137 and characterized by different seismic wave propagation velocities. Reflected seismic waves 140 (only one labeled) are then detected by seismic receivers 150 (only one labeled). Seismic data representative of the detected seismic waves may be transmitted to a server that may be located on truck 110 or at another location, via wire 155 or wirelessly via antenna 160. Seismic data collected in this manner may reveal the presence of an oil reservoir 170.

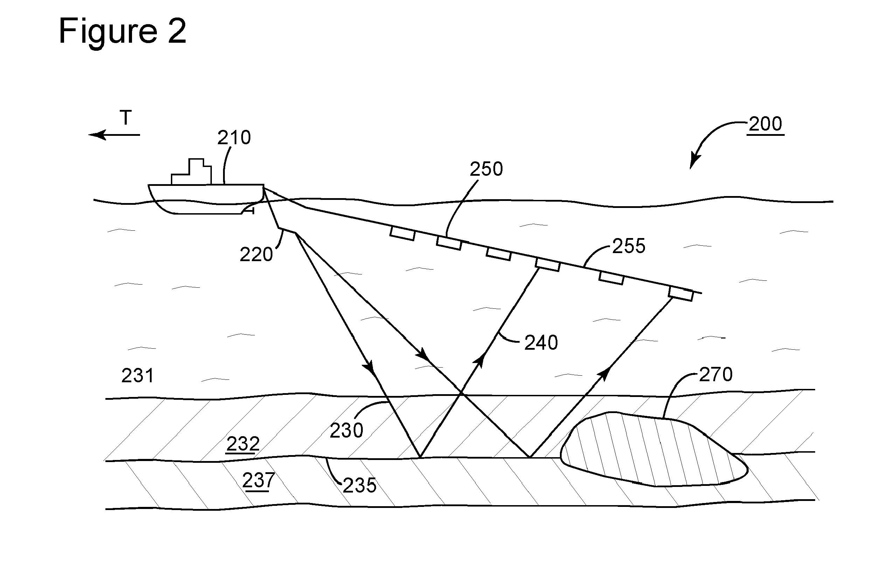

Marine seismic data is acquired after marine seismic sources (e.g., vibrators, air guns) towed by vessels close to the water surface are activated. Marine seismic detectors may be towed or may be arranged on the seafloor. Figure 2 illustrates a marine seismic data acquisition system 200. A vessel 210 tows (as suggested by arrow T) a seismic source 220 that generates seismic waves 230 (only one labeled). Seismic waves 230 penetrate seafloor 231 and are at least partially reflected by interface 235 between rock layers 233 and 237 and characterized by different seismic wave propagation velocities. Reflected seismic waves 240 (only one labeled) are then detected by seismic receivers 250 (only one labeled) arranged along a streamer 255 that may also be towed by vessel 210. Seismic data collected in this manner may reveal the presence of an oil reservoir 270.

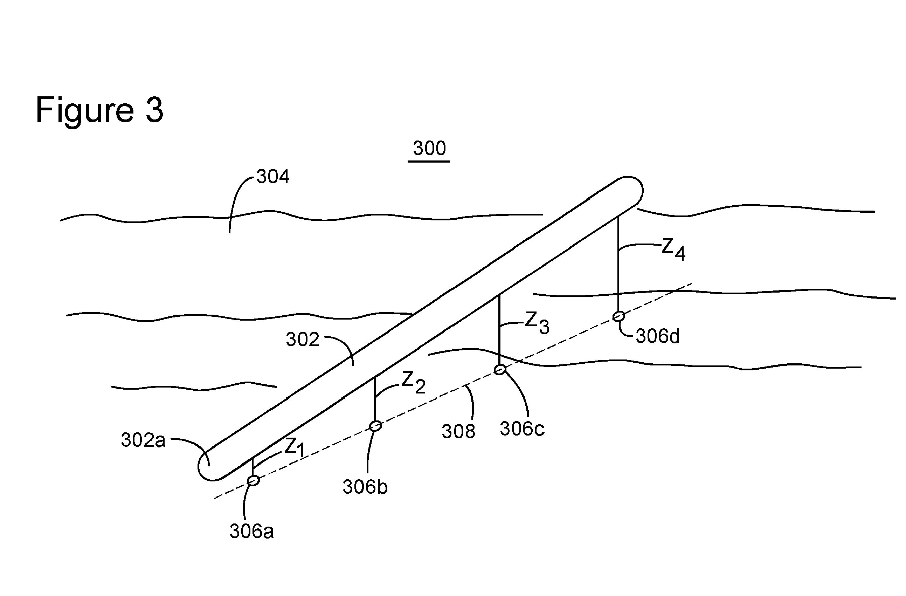

Seismic source 220 may include one or more sub-arrays that may be positioned at different depths. In one embodiment illustrated in Figure 3, a multi-level seismic source 300 that includes a float 302 configured to float at the water surface 304 or underwater at a predetermined depth. Plural source elements 306a-d are suspended at different locations along float 302. A first source element 306a may be suspended closest to head 302a (i.e., closest to the towing point) of float 302, at a first depth $z1$. A second source element 306b may be suspended next, at a second depth $z2$, different from $z1$. A third source element 306c may be suspended next, at a third depth $z3$, different from $z1$ and $z2$, and so on. Figure 3 shows, for simplicity, only four source elements 306a-d, but an actual implementation may have any desired number of source points. In one application, because the source elements are distributed at different depths, they are not simultaneously activated. If the source elements are synchronized, a deeper source element is activated later in time (e.g., 2 ms for 3 m depth difference when the speed of sound in water is 1,500 m/s) so that corresponding sound signals produced by the source elements coalesce, and thus, the overall seismic wave produced by the seismic source 300 appears as an impulse. In one embodiment, the seismic source may include high-frequency source elements that are simultaneously activated and low-frequency source elements that are simultaneously activated in flip flop relative to the high-frequency source elements. In another embodiment, all source elements are simultaneously activated with incoherent, coded signals so the recorded seismic signals can be separated based on the source element that emitted each signal.

Depths $z1$ to $z4$ may obey various relationships. In one embodiment, source element depth increases from the head toward the tail of the float, i.e., $z1 < z2 < z3 < z4$. In another embodiment, the source element depth decreases from the head to the tail of the float. In yet another embodiment, the source elements are slanted, i.e., on an imaginary line 308 that is curved, e.g., part of a parabola, circle, hyperbola, etc. A common feature of all these embodiments is that the source elements have variable depths so a single sub-array exhibits multiple-level source elements.

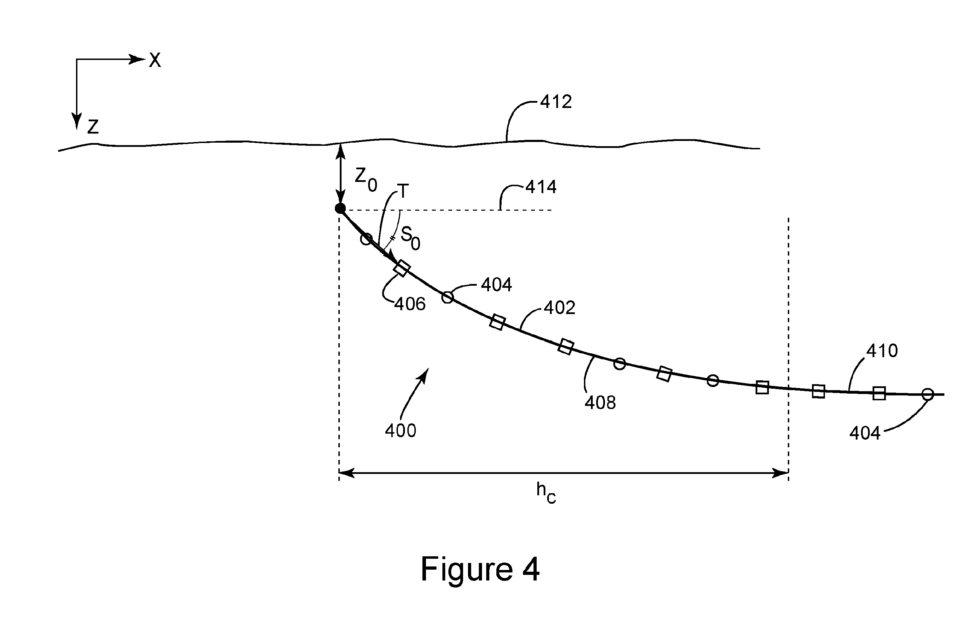

In one embodiment, marine seismic data acquisition systems include one or more streamers, such as 255 in Figure 2, towed by one or more vessels. In another embodiment, the receivers may be placed on the seafloor. The streamers may be horizontal, slanted or have a curved profile, as illustrated in Figure 4. Curved streamer 400 of Figure 4 includes a body 402 having a predetermined length, plural seismic detectors 404 arranged along the body, and plural birds 406 attached to the body to maintain the selected curved profile. The streamer is configured to flow underwater when towed such that the plural detectors are distributed along the curved profile. The curved profile may be described by a parameterized curve, e.g., a curve described by (i) a depth $z_0$ of a first detector (measured from the water surface 412), (ii) a slope $s_0$ of a first portion T of the body with an axis 414 parallel with the water surface 412, and (iii) a predetermined horizontal distance $h_c$ between the first detector and an end of the curved profile. Note that not the entire streamer has to have the curved profile. In other words, the curved profile should not be construed to always apply to the entire length of the streamer. While this situation is possible, the curved profile may be applied only to a portion 408 of the streamer. In other words, the streamer may have (i) only a portion 408 having the curved profile or (ii) a portion 408 having the curved profile and a portion 410 having a flat profile, with the two portions attached to each other.

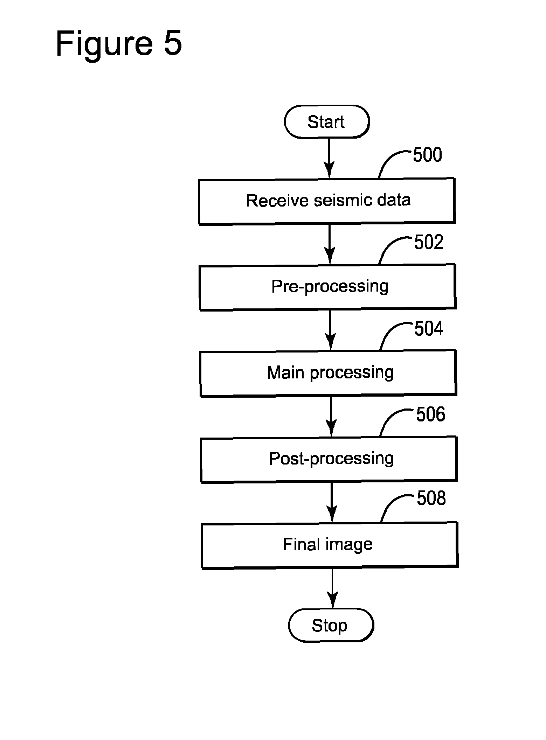

Seismic data acquired by the above-described land and marine data acquisition systems may be processed in a corresponding processing device for generating a final image of the surveyed subsurface formation as discussed now with regard to Figure 5. For example, the seismic data may be received in step 500 at the processing device. In step 502, pre-processing methods are applied, e.g., demultiplying, signature deconvolution, trace summing, vibroseis correlation, resampling, etc. Seismic data may be acquired with blended acquisition (i.e., including overlapping signals from successive shots). In step 504, the main processing takes place, e.g., deconvolution, amplitude analysis, statics determination, common middle point gathering, velocity analysis, normal-move out correction, muting, trace equalization, stacking, noise rejection, amplitude equalization, etc. In step 506, final or post-processing methods are applied, e.g., migration, wavelet processing, inversion, etc. In step 508, the final image of the subsurface is generated.

After step 502, the acquired seismic data is organized as amplitude values related to three-dimensional locations within an explored underground structure. The three-dimensional locations may include two spatial coordinates (e.g., inline and cross-line) and a temporal coordinate which is related to depth or a depth coordinate.

Amplitude is only one of the seismic attributes that can be used to image geological features. Different seismic attributes may highlight different geological features. Seismic attribute values may be calculated before or after stacking seismic traces in a common midpoint gather, and can be evaluated along a single trace or across multiple traces. Examples of seismic attributes are amplitude, acoustic impedance, coherence, azimuth, dip, spectral decomposition, etc. Thus, although the above description refers to amplitude, any of the other attributes may be filtered in a similar manner, with the other seismic attributes similarly including signal and random noise.

Intuitively, random noise can be attenuated by spatial smoothing (i.e., applying a distance related weight to attribute values of other points to calculate an average, replacing the detected attribute value). However, imposing similarity to all spatially proximate points has the effect of obscuring small-scale structures such as fault planes and channels that might define reservoir boundaries. To remove random noise without obscuring these kinds of features, some algorithms use redundancy within the data due to repetition of geological structures. Thus, random noise affecting an individual data point may be attenuated by replacing its attribute value with an attribute value which is calculated using values of other data points having similar neighborhoods with that of the individual point. This approach is known as Nonlocal-Means (NLM) random noise attenuator and is described in "A Review of Image Denoising Algorithms, with A New One" by Buades et al., published in Multiscale Model. Simul., 2005, Vol. 4, No. 2, pp. 490-530, the content of which is incorporated by reference. The disadvantage of this approach is that it requires each sample and its neighborhood to be compared with all the other samples in the data, so the computational cost becomes impractically high for the large number of samples in seismic data.

In order to attenuate random noise (i.e., to filter the signal), embodiments described below calculate an average of attribute values corresponding to points in proximity of a filtered point. When calculating the average, attribute values are weighted proportionally to how similar neighborhoods are to the filtered point's neighborhood. If a point in the filtered point's proximity has a neighborhood similar to the filtered point's neighborhood, then this point is likely part of the same geological feature as the filtered point. Similarity is determined by comparing attribute values of data points in the neighborhood surrounding filtered point to corresponding attribute values of data points in the neighborhood surrounding the other data point. Thus, if the neighborhoods are similar, this other point's attribute value likely includes the same signal as the filtered point. A relative large weight is then applied to this point's attribute value when calculating the average. Therefore, the calculated average includes the signal, but less noise than the detected attribute value, because the random noise is attenuated by averaging.

In this context, proximities (also known as "windows") of filtered points are subsets of data based on the three-dimensional coordinates. Windows may be two-dimensional or three-dimensional subsets of data. Two-dimensional windows have one of two spatial coordinates or the temporal coordinate substantially equal to the target point's respective coordinate (i.e., the windows is within a time slice, an inline slice or a cross-line slice, including the filtered point). The window includes the filtered point. Data points within the window are located at a relatively small distance from the filtered point. For example, a window may be formed by 21x21 data points (respective step sizes being determined by acquisition geometry and sampling rate) and be centered on the filtered point within a two-dimensional slice of data. Note that the window being centered on the filtered point is a possibility but not a limitation. The size of neighborhoods is smaller than the size of the window. For example, a neighborhood may be formed by 5x5 data points and be centered on the respective (filtered or proximal) point. Similar to the window, the neighborhood being centered on the point is a possibility but not a limitation.

Using windows as defined above instead of the whole data set, or an arbitrarily defined subset such as a sub-image, has the advantage of substantially reducing the amount of processing time in a manner that preserves geological details that may otherwise be lost during random noise filtering. This approach is based on the observation that redundant structures (such as the lateral extension of a fault plane or the meanders of a channel) are proximal.

Noise attenuation methods may be applied to time slices where the assumptions of redundancy are most valid. Additionally, some embodiments use three-dimensional (3D) proximities and/or neighborhoods that enable taking into consideration local details better than sets of data having only two variable coordinates. In some embodiments, because the methods are applied to normalized data, the parameter controlling the severity of random noise attenuation may have the same value for a time slice (i.e., depend on the data point's time coordinate), but may be different in different time slices as the signal-to-noise ratio changes temporally.

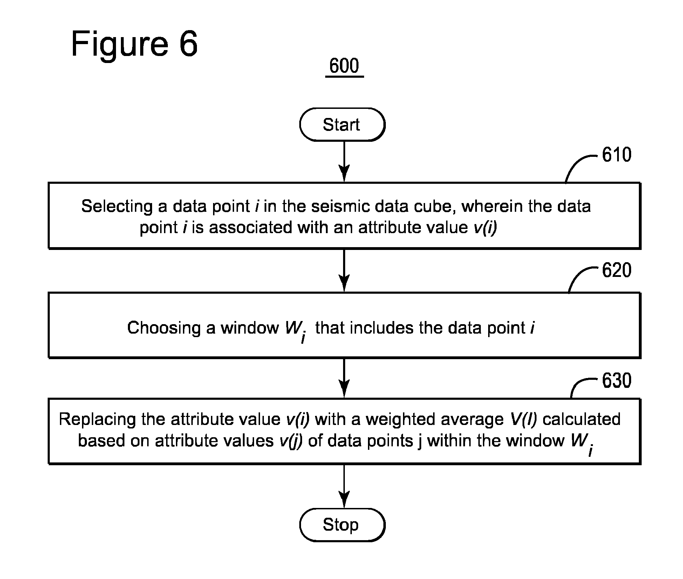

Figure 6 is a flowchart of a method 600 for attenuating random noise within a seismic data cube. As previously mentioned, seismic data is typically 3D data, with two dimensions usually representing the horizontal position of a trace's common mid-point (CMP), and a third dimension being depth or time. The seismic data cube may include post-stack 3D data or pre-stack common offset planes.

Method 600 includes selecting a data point i in the seismic data cube, wherein data point i is associated with an attribute value $v(i)$ at 610. Method 600 may be applied to all the points in the seismic cube or to a subset of points selected based on predetermined rules. In one embodiment, this noise attenuation method may be applied only to points within an area likely to include geological details usually obscured or smeared by conventional attenuation methods (while a conventional noise attenuation method is applied to the other points).

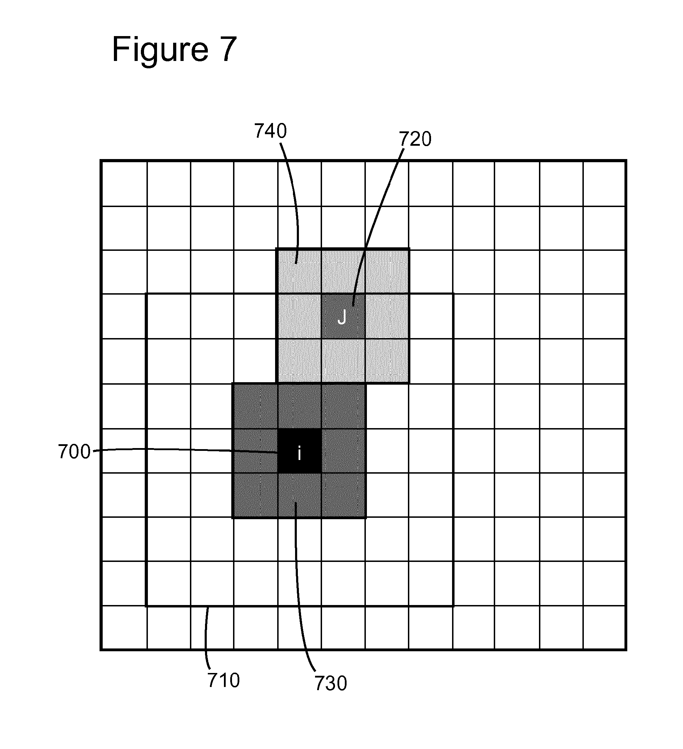

In Figure 7, where each square corresponds to a data point, selected point 700 ("$i$") is characterized by an attribute value v(i). Attribute value $v(i)$ may be a detected amplitude. The seismic data cube may include one or more inline slices, one or more cross-line slices and one or more time slices.

Method 600 further includes choosing a window $W_i$ that includes the data point, at 620. For example, in Figure 7, area 710 is a window $W_i$ surrounding data point 700.

Method 600 also includes replacing the attribute value $v(i)$ with a weighted average $\hat{v}(i)$ calculated based on attribute values $v(j)$ of data points $j$ within the window $W_i$, at 630. Looking again at Figure 7, an attribute value $v(j)$ characterizing data point $j$ 720 inside the area 710 is multiplied by a weight $w(i,j)$ to contribute to the weighted average $\hat{v}(i)$ calculated to replace attribute $v(i)$ of data point 700. In mathematical language, calculating the weighted average is summarized in the formula:

$$\hat{v}(i) = \sum_{j \in W_i} w(i,j)v(j). \tag{1}$$

In one embodiment, window $W_i$ may be a two-dimensional subset of the seismic data cube. In another embodiment, window $W_i$ may be a 3D subset of the seismic data cube.

A weight $w(i,j)$ associated to a data point j within window $W_i$ may be determined according to one or more predetermined rules. In one embodiment, the weight $w(i,j)$ may be calculated based on a comparison of attribute values in a neighborhood $N_i$ (e.g., 730 in Figure 7) surrounding data point $i$ (e.g., 700 in Figure 7) to attribute values in a neighborhood $N_j$ (e.g., 740 in Figure 7) surrounding data point j (e.g., 720 in Figure 7). Neighborhoods $N_i$ and $N_j$ may be 3D subsets of seismic data.

A result of this comparison may be a function $D^2(i,j)$ defined as:

$$D^2(i,j) = \left\| v(N_i) - v(N_j) \right\|^2_{2,\mathbf{G}_a} \tag{2}$$

where $\| \, \|_{2,G_a}$ is the norm of the scalar product whose matrix $G_a$ is the Gaussian kernel with standard deviation $a$ (the squared norm of the vector is the product of the vector itself transposed, the matrix G and the vector itself again; G is a Gaussian matrix with standard deviation $a$), and $v(N_i)$ - $v(N_j)$ represents the difference between attribute values of corresponding samples in the neighborhoods $N_i$ and $N_j$. Thus, function $D^2(i,j)$ is a similarity measure for the neighborhoods $N_i$ and $N_j$. Using the function $D(i,j)$, the weight $w(i,j)$ may be calculated as:

$$w(i,j) = \frac{1}{Z(i)} exp\left(\frac{-D^2(i,j)}{h^2}\right), \tag{3}$$

where Z(i) is a normalization factor and h is a measure of the severity of the filter. The normalization factor is calculated so that the sum of the weights equals 1.

Other similarity functions than the one in equation (2) may be defined such that the more similar the neighborhood, the lower the value of the similarity function and then the higher the weight.

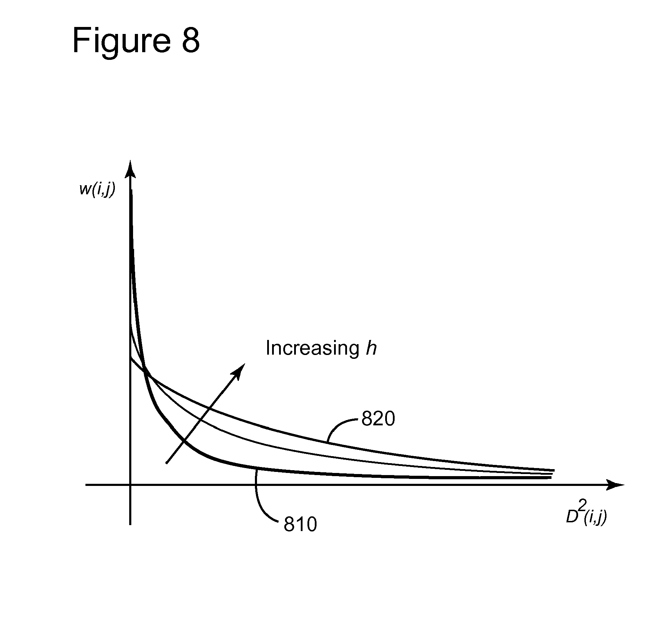

If the data is normalized, the severity of the filter applied to attenuate the random noise depends only on values of parameters h and $a$. Figure 8 is a graph qualitatively illustrating weight $w(i,j)$ as a function of the square of function $D(i,j)$. Curves 810 and 820 in this graph correspond to different values of parameter h. If h is small (e.g., 0.2, curve 810), the weighted average $\hat{v}(i)$ is similar to the original attribute value $v(i)$ because only data points $j$ whose neighborhoods $N_j$ are very similar to neighborhood $N_i$ are assigned non-negligible weights $w(i, j)$. Therefore, for a small $h$, the random noise attenuation is a mild filter.

Conversely, if h is large (e.g., 0.6, curve 820), the weighted average $\hat{v}(i)$ can be significantly different from the original attribute value $v(i)$, because data points j whose neighborhoods $N_j$ are quite different from neighborhood $N_i$ are assigned non-negligible weights $w(i,j)$. Therefore, for a large $h$, the random noise attenuation is a severe filter.

In one embodiment, the filter factor $h^2$ may be a function of the data point $i$'s vertical coordinate. In another embodiment, the filter factor $h^2$ may be adjusted depending on a signal-to-noise ratio within the seismic data cube.

Images of the explored subsurface structure may be generated after applying a random noise attenuation method according to one of the various described embodiments. Image interpretation then yields more accurate information about geological features of the explored subsurface structure than without applying this algorithm.

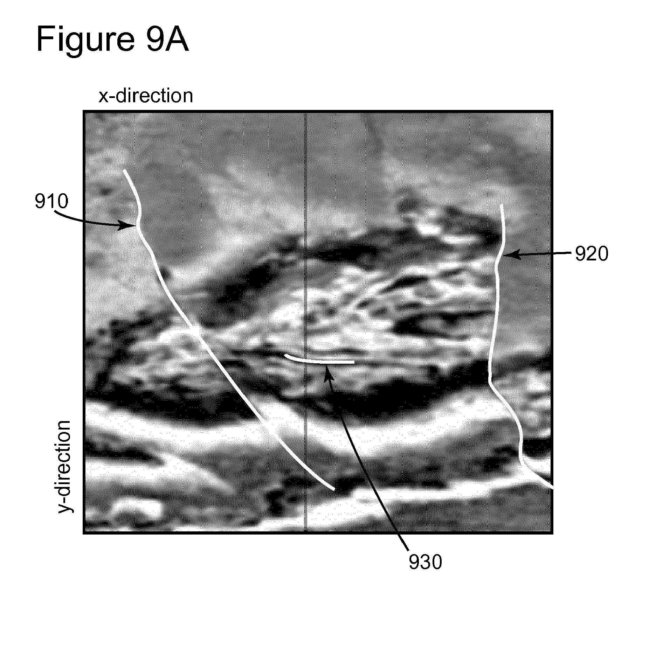

The above-described method using formula (3) has been applied to post-stack seismic 3D real data and compared to random noise attenuation achieved upon applying the conventional method using Fxy deconvolution to the same data. Figure 9A illustrates a time slice (i.e., 2D image in a horizontal plane) before applying noise attenuation methods, with data including both signals carrying information and random noise. Three stratigraphic features can be identified in Figure 9A: faults 910 and 920 and channel 930.

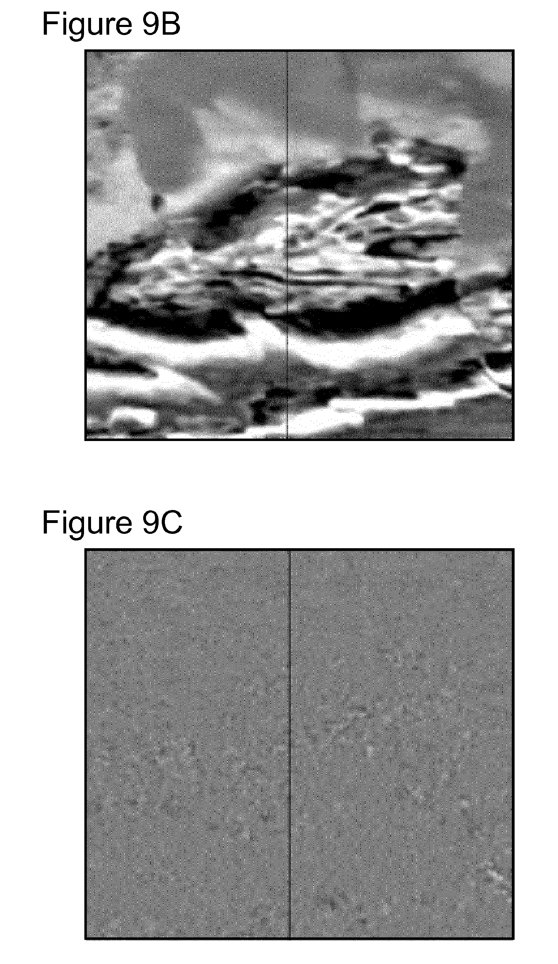

Figure 9B illustrates the time slice of Figure 9A after the random noise attenuation method based on formula (3) has been applied, and Figure 9C illustrates the noise removed by applying this method (i.e., a difference between Figure 9A and Figure 9B). The removed noise illustrated in Figure 9C appears to be indeed random because Figure 9C does not exhibit features resembling the features in Figure 9A.

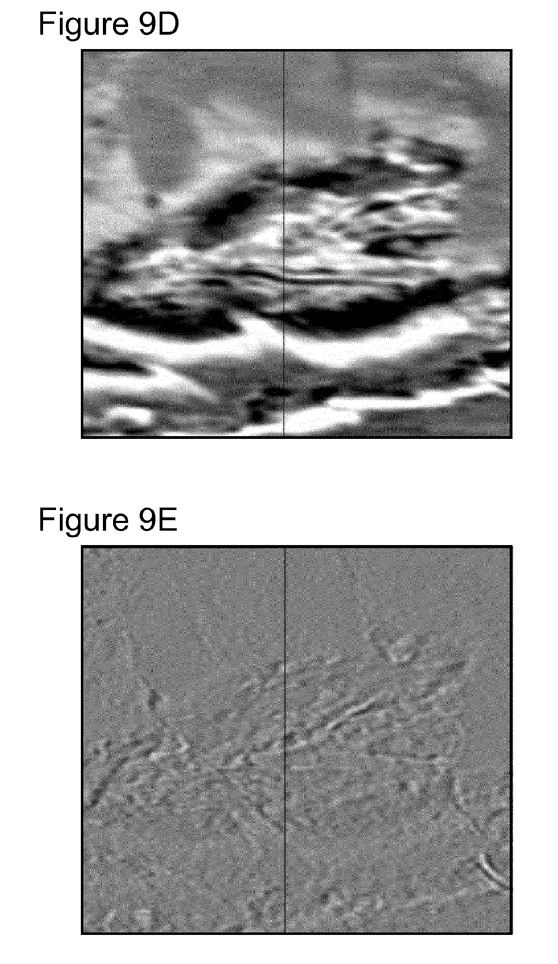

Figure 9D illustrates the time slice of Figure 9A after applying the conventional method using Fxy deconvolution, and Figure 9E illustrates the noise removed by applying this method (i.e., a difference between Figure 9A and Figure 9D). In contrast to Figure 9C, Figure 9E includes features that appear to be a pale copy of the features from Figure 9A. The presence of these features indicates that the original image's sharpness is degraded when the conventional Fxy method is applied.

While the amount of noise in Figures 9C and 9E is roughly equal, applying the random noise attenuation method based on formula (3) does not diminish the edge definition of features 910, 920 and 930 as much as applying the conventional method does. Geological boundary information contained in the unfiltered time slice illustrated in 9A remains intact in Figure 9B, thus, the method using formula (3) is better at preserving details in potential structural and stratigraphic traps.

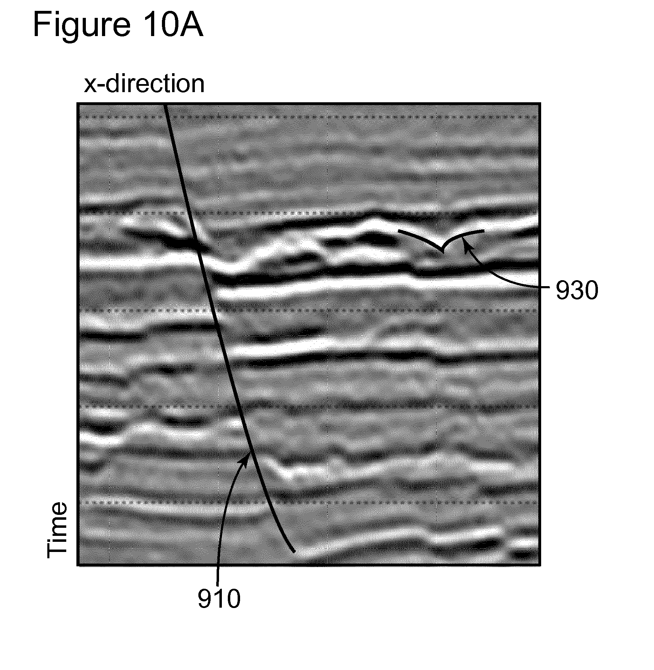

Figure 10A illustrates an inline slice (i.e., 2D image representing one spatial dimension along a data acquisition line versus time) before applying noise attenuation methods. Fault 910 and channel 930 may also be observed in this image.

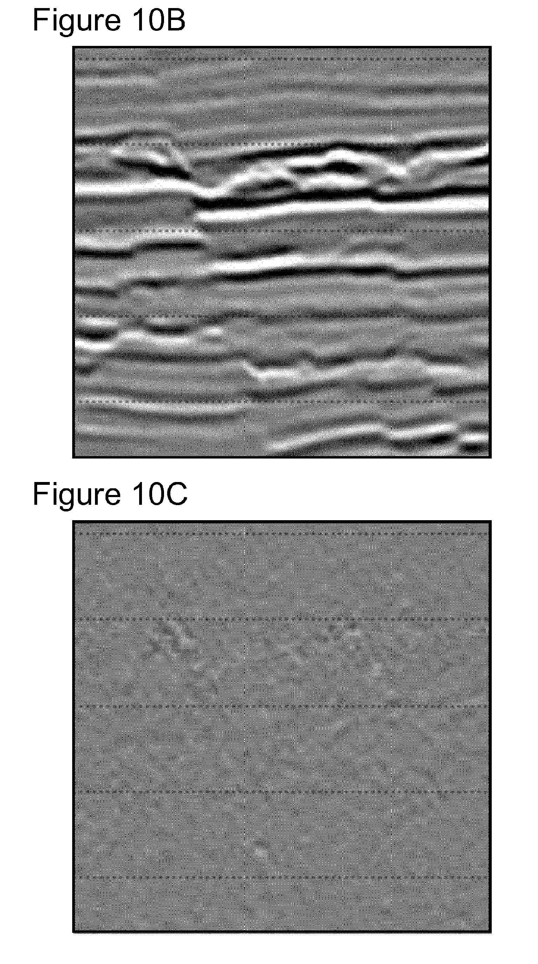

Figure 10B illustrates the inline slice of Figure 10A after the method based on formula (3) has been applied, and Figures 10C illustrates the noise removed by applying this method (i.e., a difference between Figure 10A and Figure 10B). The denoising is performed in time slices, and, then, a vertical section is shown. Similar to Figure 9C, the removed noise illustrated in Figure 10C appears to be indeed random.

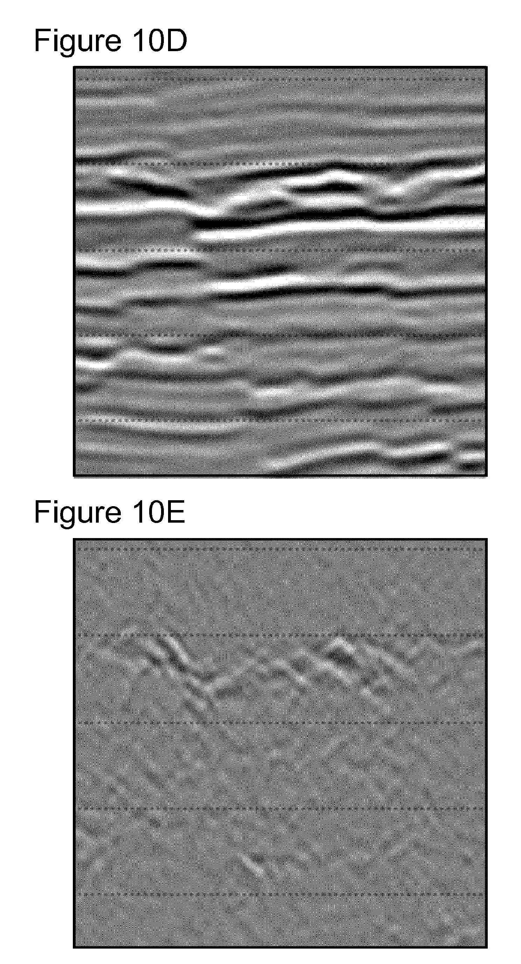

Figure 10D illustrates the inline slice of Figure 10A after applying the conventional method using Fxy deconvolution, and Figure 10E illustrates the noise removed by applying this method (i.e., a difference between Figure 10A and Figure 10D). Figure 10E appears to include features that are a pale copy of features in Figure 10A, thus indicating that the original image's sharpness is degraded when the conventional method is applied. Similar to the comparison of Figures 9B-9E, comparing Figures 10B-10E proves that the method using formula (3) is better than the conventional method at preserving details in potential structural and stratigraphic traps, with less degradation in image sharpness.

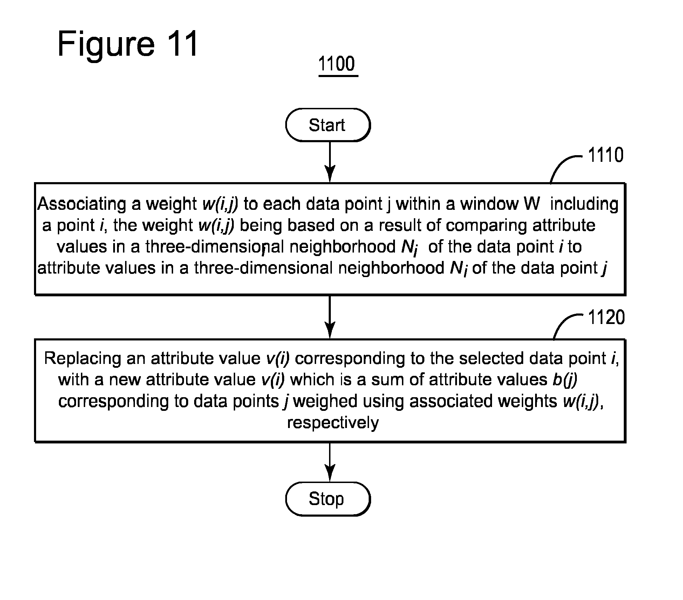

Figure 11 is a flowchart of a method 1100 for attenuating random noise in seismic data according to another embodiment. Method 1100 includes associating a weight $w(i,j)$ to each of data points $j$ within window $Wi$ including a data point i, at 1110. Weight $w(i,j)$ is based on a result of comparing attribute values in a 3D neighborhood $N_i$ of data point $i$ to attribute values in a 3D neighborhood $N_j$ of data point j.

Method 1100 further includes replacing an attribute value $v(i)$ corresponding to the selected data point $i$ with a new attribute value $\hat{v}(i)$ at 1120. The new attribute value is a sum of attribute values $v(j)$ corresponding to data points j weighed using associated weights $w(i,j)$. Method 1100 may further include generating an image of an underground structure using the seismic data as modified by replacing the an attribute value $v(i)$ with a new attribute value $\hat{v}(i)$.

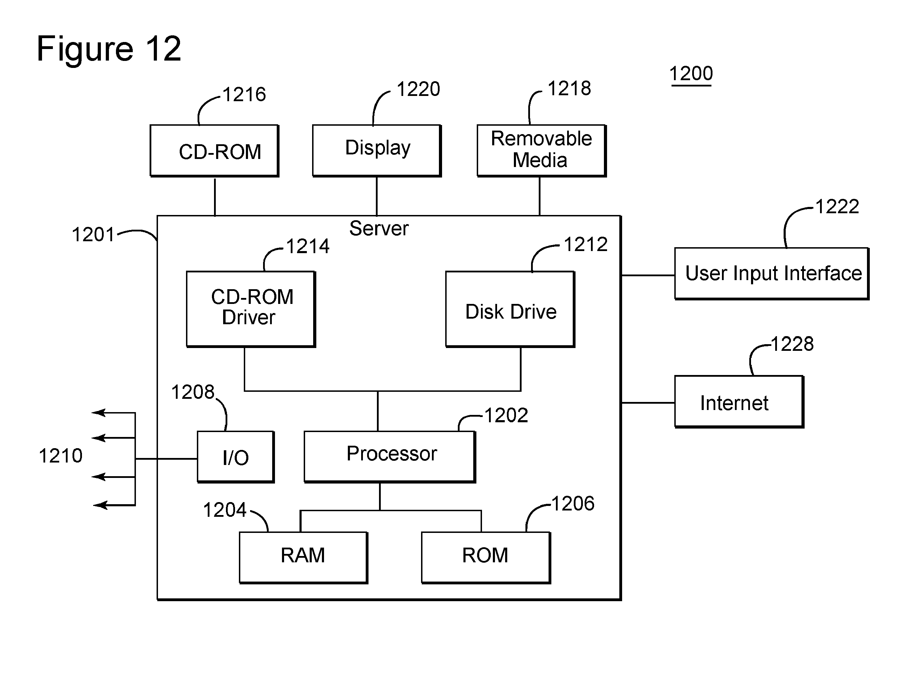

An example of a representative processing device 1200 capable of carrying out steps 502-508 in Figure 5 or only the operations in accordance with the methods discussed above is illustrated in Figure 12. Hardware, firmware, software or a combination thereof may be used to perform the various steps and operations. Processing device 1200 may include server 1201 having a central processor unit (CPU) 1202 coupled to a random access memory (RAM) 1204 and to a read-only memory (ROM) 1206. ROM 1206 may also be other types of storage media to store programs, such as programmable ROM (PROM), erasable PROM (EPROM), etc. Methods for attenuating random noise according to various embodiments described in this section may be implemented as computer programs (i.e., executable codes) non-transitorily stored on RAM 1204 or ROM 1206.

Processor 1202 may communicate with other internal and external components through input/output (I/O) circuitry 1208 and bussing 1210, to provide control signals and the like. For example, processor 1202 may communicate with the sensors, electro-magnetic actuator system and/or the pressure mechanism of each source element. Processor 1202 carries out a variety of functions as are known in the art, as dictated by software and/or firmware instructions. Processor 1202 is also configured to attenuate random noise in seismic data by replacing an attribute $v(i)$ of at least one selected data point $i$ with a weighted average $\hat{v}(i)$ of attribute values $v(j)$ associated with data points $j$ from a window

$W_i$ that includes the selected data point i.

Server 1201 may also include one or more data storage devices, including disk drives 1212, CD-ROM drives 1214, and other hardware capable of reading and/or storing information, such as a DVD, etc. In one embodiment, software for carrying out the above-discussed steps may be stored and distributed on a CD-ROM 1216, removable media 1218 or other form of media capable of storing information. The storage media may be inserted into, and read by, devices such as the CD-ROM drive 1214, disk drive 1212, etc. Server 1201 may be coupled to a display 1220, which may be any type of known display or presentation screen, such as LCD, plasma displays, cathode ray tubes (CRT), etc. Server 1201 may be control display 1220 to exhibit images generated using seismic data such as in Figures 9A-E and 10A-E. A user input interface 1222 is provided, including one or more user interface mechanisms such as a mouse, keyboard, microphone, touch pad, touch screen, voice-recognition system, etc.

Server 1201 may be coupled to other computing devices, such as the equipment of a vessel, via a network. The server may be part of a larger network configuration as in a global area network (GAN) such as the Internet 1228, which allows ultimate connection to the various landline and/or mobile client/watcher devices.

The disclosed embodiments provide methods and devices for attenuating random noise in seismic data. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in particular combinations, each feature or element may be usable alone without the other features and elements of the embodiments or in other various combinations with or without other features and elements disclosed herein.

The written description uses examples of the subject matter disclosed to enable any person skilled in the art to practice the same, including making and using the described devices or systems and performing any of the described methods. The patentable scope of the subject matter is defined by the claims, and may include other examples that occur to those skilled in the art. Such examples are intended to be within the scope of the claims.

**Claims**

1. A method (600) for attenuating random noise within a seismic data cube, the method comprising:

   selecting (610) a data point $i$ (700) in the seismic data cube, wherein the data point i is associated with an attribute value $v(i)$;
   choosing (620) a window $W_i$ (710) that includes the data point $i$; and
   replacing (630) the attribute value $v(i)$ with a weighted average $\hat{v}(i)$ calculated by a processor based on attribute values $v(j)$ of data points $j$ within the window $W_i$.

2. The method of claim 1, wherein the window $W_i$ is a two-dimensional subset of the seismic data cube.

3. The method of claim 1, wherein the window $W_i$ is a three-dimensional subset of the seismic data cube.

4. The method of claim 1, wherein the attribute is an amplitude of a seismic signal.

5. The method of claim 1, wherein the window $W_i$ is a subset of an inline slice, cross-line slice, a time slice or a depth slice extracted from a seismic data set.

6. The method of claim 1, wherein for calculating the weighted average $\hat{v}(i)$, a weight $w(i,j)$ associated to each data point j within the window $W_i$ is applied to a respective attribute value $v(j)$, the weight $w(i,j)$ being determined based on a comparison of attribute values in a neighborhood $N_i$ surrounding data point $i$ to attribute values in a neighborhood $N_j$ surrounding data point $j$.

7. The method of claim 6, wherein the neighborhood $N_i$ and the neighborhood $N_j$ are two dimensional subsets of seismic data.

8. The method of claim 6, wherein the weight $w(i,j)$ is inversely proportional with an exponential of a ratio of (1) a similarity measure $D^2(i, j)$ resulting from the comparison and (2) a filter factor $h^2$.

9. The method of claim 8, wherein the filter factor $h^2$ is selected based on a time or depth coordinate of the data point $I$, and/or is adjusted depending on a signal-to-noise ratio characterizing the data cube.

10. The method of claim 8, wherein the similarity measure $D^2(i, j)$ is defined as

$$D^2(i,j) = \left\| v(N_i) - v\left(N_j\right) \right\|_{2,\mathbf{G}_a}^2$$

where $\| \|_{2,G_a}$ is the norm of the scalar product whose matrix $G_a$ is the Gaussian kernel with standard deviation $a$, and $v(N_i)$ - $v(N_j)$ represents difference between attribute values of corresponding attribute values in the neighborhood $N_i$ and the neighborhood $N_j$.

11. The method of claim 1, wherein a sum of weights used for calculating the weighted average is 1.

12. The method of claim 1, wherein the window $W_i$ is included in a time-slice of the seismic data cube.

13. The method of claim 1, wherein a data normalization is applied before the replacing of the attribute value.

14. A method (600) for seismic data processing, the method comprising:

replacing (630) an attribute value $v(i)$ of a selected data point i (700) with a linear combination $\hat{v}(i)$ of attribute values $v(j)$ of data points $j$ from a window $W_i$ (710) including the selected data point i, the window $W_i$ being a three-dimensional subset of seismic data; and
generating (508) an image of an underground structure using the seismic data after the replacing.

15. A method (1100) for attenuating random noise is seismic data, the method comprising:

associating (1110) a weight $w(i,j)$ to each data point $j$ within a window $Wi$ including a point $i$, the weight $w(i,j)$ being based on a result of comparing attribute values in a three-dimensional neighborhood $N_i$ of the data point $i$ to attribute values in a three-dimensional neighborhood $N_j$ of the data point $j$; and
replacing (1120) an attribute value $v(i)$ corresponding to the selected data point i, with a new attribute value $\hat{v}(i)$ which is a sum of attribute values $v(j)$ corresponding to data points $j$ weighed using associated weights $w(i,j)$, respectively.

Figure 1

EP 2 784 552 A2

## Figure 2

Figure 3

Figure 4

EP 2 784 552 A2

# Figure 5

```
            ┌─────────┐
            │  Start  │
            └─────────┘
                 │
                 ▼          ⌒500
   ┌──────────────────────────┐
   │    Receive seismic data  │
   └──────────────────────────┘
                 │
                 ▼          ⌒502
   ┌──────────────────────────┐
   │      Pre-processing       │
   └──────────────────────────┘
                 │
                 ▼          ⌒504
   ┌──────────────────────────┐
   │      Main processing      │
   └──────────────────────────┘
                 │
                 ▼          ⌒506
   ┌──────────────────────────┐
   │      Post-processing      │
   └──────────────────────────┘
                 │
                 ▼          ⌒508
   ┌──────────────────────────┐
   │        Final image        │
   └──────────────────────────┘
                 │
                 ▼
            ┌─────────┐
            │  Stop   │
            └─────────┘
```

# Figure 6

<u>600</u>

Start

610

Selecting a data point $i$ in the seismic data cube, wherein the data point $i$ is associated with an attribute value $v(i)$

620

Choosing a window $W_i$ that includes the data point $i$

630

Replacing the attribute value $v(i)$ with a weighted average $V(I)$ calculated based on attribute values $v(j)$ of data points j within the window $W_i$

Stop

# Figure 7

# Figure 8

# Figure 9A

x-direction

910

920

y-direction

930

## Figure 9B

## Figure 9C

## Figure 9D

## Figure 9E

Figure 10A

x-direction

930

910

Time

## Figure 10B

## Figure 10C

Figure 10D

Figure 10E

# Figure 11

1100

Start

1110

Associating a weight $w(i,j)$ to each data point j within a window W  including a point $i$, the weight $w(i,j)$ being based on a result of comparing attribute values in a three-dimensional neighborhood $N_i$ of the data point $i$ to attribute values in a three-dimensional neighborhood $N_j$ of the data point $j$

1120

Replacing an attribute value $v(i)$ corresponding to the selected data point $i$, with a new attribute value $v(i)$ which is a sum of attribute values $b(j)$ corresponding to data points $j$ weighed using associated weights $w(i,j)$, respectively

Stop

# Figure 12

EP 2 784 552 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61804375 A

- US 61832413 A

### Non-patent literature cited in the description

- **M. CHASE.** Random noise reduction by FXY prediction filtering. *EAGE Conf. Exp. Abs., Paris,* 1992, 164-165
- **M. CHASE.** Random noise reduction by 3-D spatial prediction filtering. *SEG Ann. Mtg. Exp. Abs., New Orleans,* 1992, 1152-1153
- **N. GULUNAY ; V. SUDHAKAR ; C. GERRARD ; D. MONK.** Prediction filtering for 3-K poststack data. *SEG Ann. Mtg. Exp. Abs., Washington, D.C.,* 1993, 1183-1186
- **CHIU, S. K. ; J. E. HOWELL.** Attenuation of coherent noise using localized-adaptive eigenimage filter. *SEG, Expanded Abstracts,* 2008, 2541-2545

- **CHIU, S. K.** F-xy noise attenuation via multichannel singular spectrum analysis in randomized domain. *SEG, Expanded Abstracts,* 2011, 3612-3616
- **TRICKETT et al.** Prestack rank-reducing noise suppression: theory. *SEG Houston 2009 International Exposition and Annual Meeting,* 2009, 3332-3336
- **BUADES et al.** A Review of Image Denoising Algorithms, with A New One. *Multiscale Model. Simul.,* 2005, vol. 4 (2), 490-530